# EUROPEAN PATENT APPLICATION

(11) **EP 3 034 265 A1**
(43) Date of publication of application: **22.06.2016**
(21) Application number: 14307114.0
(22) Date of filing: 19.12.2014
(51) Int. Cl.: B29C 45/00, B29C 45/14, B29C 45/72

(54) **Process for injection moulding a fiberous reinforced plastic material part with a preshaping step**

(71) Applicant: Faurecia Bloc Avant, 92000 Nanterre (FR); Faurecia Exteriors GmbH, 31655 Stadthagen (DE)
(72) Inventor: Menard, Magalie, 90200 Auxelles-Haut (FR); Compagnon, Philippe, 25700 Valentigney (FR); Moressee, Aurélien, 91781 Weissenburg in Bayern (DE); Richard, Frédéric, 49420 Pouancé (FR)
(74) Representative: Blot, Philippe Robert Emile

(57) **Abstract**

This method for producing a plastic material part (10), comprises at least a reinforcing element (12) made of at least one fibrous insert (20) made of a composite material, using an injection mold (26) comprising a first part (28) and a second part (30) defining between them a molding cavity (38) having the shape of the plastic material part (10) to be produced, said method comprising the steps of:
- transporting and placing the reinforcing element (12) onto the first part (28) of the injection mold (26) using a manipulating tool (40),
- shaping the fibrous insert (20) into the reinforcing element (12),
- injecting a plastic material into the mold (26) such that the reinforcing element (12) is overmolded by the plastic material and the plastic material part (10) is produced,

wherein the manipulating tool (40) comprises at least one shaping area (42) having the shape of one side of the reinforcing element (12), the fibrous insert (20) being placed in said shaping area (42) during the transportation of the fibrous insert (20) to the first part (28) of the mold (26) and being shaped into the reinforcing element (12) by said shaping area (42) and said first part of the mold (28) when said insert (20) is transported or/and is placed onto the first part (28) of the injection mold (26).

## Description

The invention relates to a method for producing a plastic material part, comprising at least a reinforcing element made of at least one fibrous insert made of a composite material, using an injection mold comprising a first part and a second part defining between them a molding cavity having the shape of the plastic material part to be produced, said method comprising the steps of:
- transporting and placing the reinforcing element onto the first part of the injection mold using a manipulating tool,
- shaping the fibrous insert into the reinforcing element; and
- injecting a plastic material into the mold such that the reinforcing element is overmolded by the plastic material and the plastic material part is produced.

The invention relates also to the plastic material part produced by this method.

Such methods for producing a reinforced plastic material part are well-known for example for producing inner or outer trim parts for automotive vehicles. The use of a reinforcing element made of composite material allows reducing the amount of plastic material required to produce a part while maintaining satisfactory mechanical properties, such as rigidity. Consequently, the plastic material parts can be made lighter and thinner while preserving the features required to fulfill their functions.

Inserts are generally first shaped in a particular mold defining the shape of the reinforcement element to be produced, and are then transported, in the shape of the reinforcement element, to the injection mold where they are held in position before the injection of the plastic material. However, this solution requires two molds, one for shaping the reinforcement element and one for shaping the final plastic material part, particular means arranged for retrieving the reinforcement part from the first mold and for moving it and placing it in the second mold, and a large number of production steps, which makes the method time consuming and costly.

Another solution is to secure the inserts on a first part of the injection mold before they are shaped and to shape the inserts into reinforcing parts by closing the mold a first time onto the inserts and then to move the mold such that it defines the injection cavity wherein the plastic material can then be injected.

While this method is less time consuming and requires a fewer production steps, it remains unsatisfactory in terms of throughput.

Furthermore, when the inserts are shaped into reinforcing parts, the inserts touch both the first part and the second part of the injection mold and the first part and the second part are in contact with each other around the inserts. As a result, both parts of the injection mold can be altered after a number of production cycles, which is particularly negative for the second part of the mold which can be grained and provide an aesthetic surface to the final part.

In many industries, such as the car industry, some reinforced plastic material parts are used on the outside of cars and are therefore visible from the outside. When both of the parts of the injection mold are altered, the produced plastic material part is flawed on both the inside and the visible sides. Therefore the plastic material part can be rejected to fit the aesthetic standards although it is flawless in terms of mechanical characteristics.

One of the aims of the invention is to propose a method for producing a reinforced plastic material part that fits the technical and aesthetic standards while reducing the number of steps and using only one mold.

According to the invention, these objects are achieved by the manipulating tool comprises at least one shaping area having the shape of one side of the reinforcing element, the fibrous insert being placed in said shaping area during the transportation of the fibrous insert to the first part of the mold and being shaped into the reinforcing element by said shaping area and said first part of the mold when said insert is transported or/and is placed onto the first part of the injection mold.

Using the manipulating tool with the first part of the mold to shape the reinforcing element allows having a single mold to produce the plastic material part, reduces the time required to perform the method and protects the second part of the mold, which does not have to come into contact with the reinforcement element or with the first part of the mold.

According to preferred embodiments, the inventive method includes one, several or all of the following features, in all technically possible combinations:
- the shaping area is a counterform having a complementary shape of the shape of the wanted reinforcing element;
- it comprises a step of heating the fibrous insert prior and/or during the transportation of the reinforcing element to the first part of the mold ;
- the manipulating tool has a blowing device and/or an ejection unit arranged to eject the reinforcing element from the shaping area after it is shaped and before the injection of the plastic material.
- the reinforcing element is secured on the first part of the mold while and/or after it is shaped and before the injection of the plastic material;
- the fibrous insert comprises fabrics of composite material comprising fiberglass or carbon fiber or other kind of fibers, unidirectional or weaved together along two perpendicular directions;
- the reinforcing element is made of a plurality of fibrous inserts, said plurality of fibrous inserts being placed on the shaping area of the manipulation tool, being shaped together into the reinforcing element and being bound together by overmolding during the injection of the plastic material;
- the plastic material penetrates into the reinforcing element, during its injection, and blends with the composite material of the reinforcing element; and
- the plastic material forms a main surface of the plastic material part on one side of the reinforcing element and at least one rib on the other side of the reinforcing element.

The invention relates also to the plastic material part made according to the method described hereabove.

Other aspects and advantages of the invention will appear upon reading the following description, given by way of example and made in reference to the appended drawings, wherein:
- figure 1 is a sectional view of a plastic material part produced according to the method of the invention;
- figure 2 is a sectional view of a mold used for the production of the plastic material part of figure 1;
- figure 3 is a cross sectional view of the manipulating tool during the step of placing a fibrous insert inside the shaping area of the manipulating tool;
- figure 4 is a cross sectional view of the manipulating tool and of the first part of the mold during the step of shaping the fibrous insert;
- figure 5 is a cross sectional view of the mold during the step of closing the mold; and
- figure 6 is a cross sectional view of the mold during the step of injecting a plastic material.

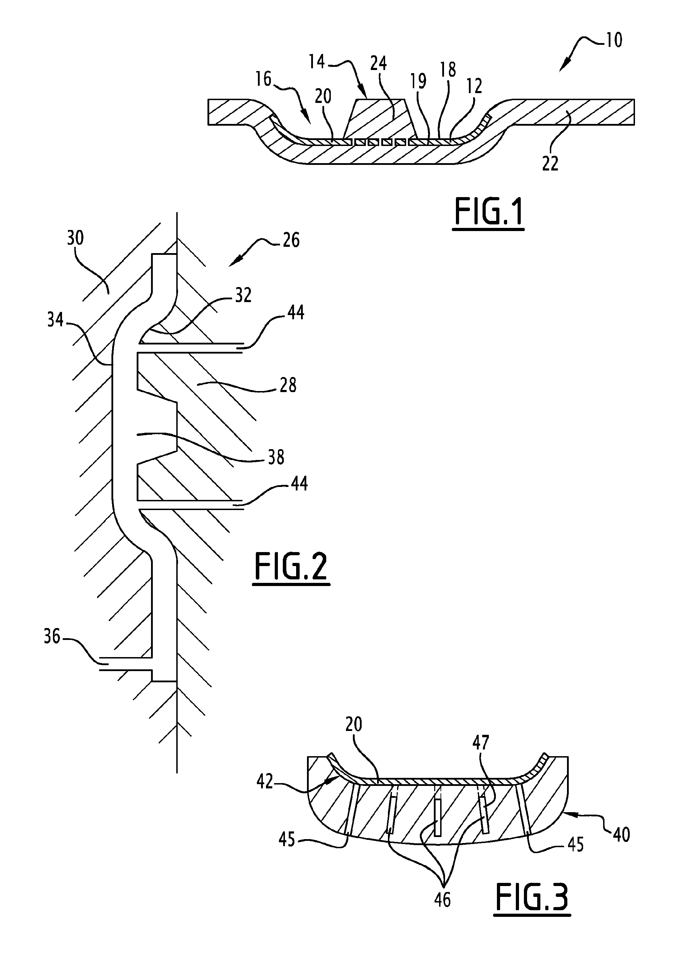

An example of a reinforced plastic material part produced by the method of the invention is shown in Figure 1.

This plastic material part 10 comprises at least one reinforcing element 12 overmolded by a plastic body 14.

The reinforcing element 12 presents a three-dimensional shape such as, for example, a bowl like shape or a U-section/parabolic section and forming a recess 16. The reinforcing element 12 comprises an inner face 18 extending on the side of the recess and an outer face 19 opposite the inner face. The shape of the reinforcement element 12 mainly depends on the plastic material part 10 (design, etc.) to be produced and to the mechanical properties required in particular areas of the plastic material part 10. The reinforcement element 12 is used to improve the mechanical strength of the plastic material part 10 and to increase its rigidity, such that the plastic material part 10 can sustain predetermined loads.

The reinforcing element 12 is made out of at least one fibrous insert 20 which is blended with a plastic material matrix. The fibrous insert 20 for example comprises a fabric or fabrics of composite material comprising unidirectional and continuous fibers or continuous glass fiber weaved together along one direction or along two perpendicular directions. The plastic material of the matrix is for example polypropylene or polyamide. The fibers can also be glass fibers or carbon fibers or other kind of fibers. The fibers can be pre-impregnated or not.

The plastic body 14 comprises a main portion 22 forming the main surface of the plastic material part 10 and which covers the outer side 19 of the reinforcing element 12. According to the embodiment shown in Fig. 1, the main portion 22 is more extended than the reinforcing element 12, meaning the reinforcing element 12 extends on a particular area of the main portion 22 only and not on the whole main portion 22. According to various embodiments, the reinforcing element 12 can extend on a more or less extended area of the main portion 22 and even on the whole surface of the main portion 22. According to other embodiments, several reinforcing elements 12 can be provided, said reinforcing elements 12 being distributed in particular areas of the plastic material part 10 and being spaced from each other or being linked together.

The thickness of the main portion 22 can be constant, and the part 10 has a greater thickness opposite the reinforcing element 12. Alternatively the main portion 22 can also be thinner or thicker opposite the reinforcing element 12. More particularly, the thickness of the main portion 22 opposite the reinforcing element 12 can be arranged such that the part 10 has a constant thickness.

According to the embodiment shown in figure 1, the plastic body 14 further comprises at least one rib 24 extending from the inner face 18 of the reinforcing element 12. The rib 24 can be part of a rib network formed on the inner face 18 of the reinforcing element 12 and possibly on the inner face of the main portion 22. Alternatively, no rib is provided on the inner face 18 of the reinforcement element 12.

Figure 2 represents the injection mold 26 used to produce a plastic material part 10 comprising a bowl-like shaped reinforcing element 12 and a single rib 24. The mold comprises a first part 28 and a second part 30, both comprising an inner wall 32, 34.

The first part 28 and/or the second part 30 of the mold 26 comprise an inlet 36 for plastic material.

Classically, the first part 28 and the second part 30 are movable relative to each other between two positions of the mold 26: open and closed.

When the mold 26 is open, the inner wall 32 of the first part 28 of the mold 26 and the inner wall 34 of the second part 30 of the mold 26 are spaced apart from each other such that the inner wall 32 of the first part 28 and the inner wall 34 of the second part 30 are accessible for placing or retrieving elements in or from the mold 26.

When the mold 26 is closed, as shown in figure 2, the inner wall 32 of the first part 28 and the inner wall 34 of the second part 30 are brought close, such that the first part 28 and the second part 30 of the mold 26 define together a hermetically closed injection cavity 38. The cavity 38 has the shape of the plastic material part 10 to be produced. Consequently, the inner wall 32 of the first part 28 has the shape of the inner face of the plastic material part 10 and the inner wall 34 of the second part 30 has the shape of the outer of the plastic material part 10.

The method for producing the reinforced plastic material part 10 shown in Figure 1 will now be described.

Firstly, one or several fibrous inserts 20 are heated in an oven, for example with hot air or infra-red, in order to allow their forming. According to another embodiment, the insert 20 is not heated but is naturally malleable and does not need to be heated.

In one embodiment, the fibrous inserts 20 are cut out before or after the step of heating. There is then no need to cut them out again. Consequently, once the plastic material part is finished, there is no need of a finishing step outside of the mold. The final part can therefore be obtained directly in the mold.

Then, as depicted on figure 3, the inserts 20 are transported by a manipulating tool 40. The manipulating tool 40 is arranged to move at least one fibrous insert 20 or several fibrous inserts 20, when the reinforcing portion 12 is made of several fibrous inserts 20, from the oven to the mold 26. Consequently, the manipulating tool 40 is arranged to be able to pick up, for example by vacuum sucking or by needle gripping, one or several fibrous inserts 20 and to hold them during the displacement of the manipulating tool 40 from the oven to the mold 26, where the manipulating tool 40 is arranged to release the fibrous insert(s) 20.

To reduce the transfer time, a transfer tool, different from the manipulating tool 40, is used to pick up the inserts from the oven or from their storing area, for example by vacuum sucking or by needle gripping. Then the transfer tool positions the fibrous inserts 20 onto the shaping area 42 of the manipulating tool 40 before or at the end of the step of heating.

The manipulating tool comprises at least one shaping area 42, having the shape of the outer side 19 of the reinforcing element 12 of the part 10 to be produced. The shaping area 42 is consequently a counterform of the wanted reinforcing element 12.

The manipulating tool 40 can be equipped with a heating device for maintaining the temperature of the shaping area 42 and what is on the shaping area 42. Alternatively, the manipulating tool 40 in itself is arranged to be able to heat the shaping area 42 and what is on the shaping area 42 instead of using a separate oven.

The fibrous inserts 20 are pre-heated in an oven and picked up by the manipulation tool 40 and placed in the shaping area 42. The shaping area 42 can be placed in the oven to allow to heat simultaneously the fibrous insert 20 and the shaping area 42 and consequently limit the fibrous inserts 20 cooling rate by contact with the shaping area 42 during the transfer up to the injection mold 26. The shaping area 42 can be a grid instead of a full shape to limit the contact between fibrous inserts 20 and the shaping area 42 and consequently the cooling rate of the fibrous inserts 20.

The fibrous inserts 20 are then malleable, but not liquid. Thanks to their malleable state, the fibrous inserts 20 take the shape of the shaping area 42 during the movement of the manipulating tool 40 between the oven and the mold 26. According to another embodiment, the insert 20 is not heated but is naturally malleable and does not need to be heated. The fibrous insert 20 are then connected together into the reinforcing element 12.

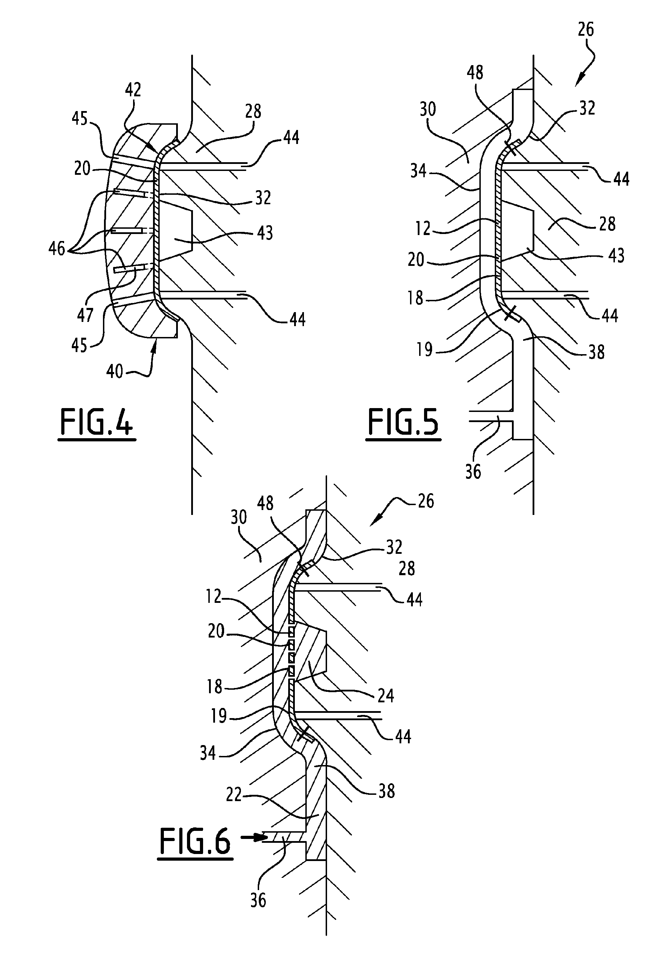

As represented on figure 4, the reinforcing element 12 is placed by the manipulating tool 40 onto the injection mold 26, which is open.

More particularly, the manipulating tool 40 places the shaping area 42 onto the inner wall 32 of the first part 28 of the injection mold 26 in an area of said inner wall 32 corresponding to the place of the reinforcement element 12 in the plastic material part 10. Consequently, when a rib 24 is provided on the inner face 18 of the reinforcement element 12, the reinforcing element 12 is placed opposite the recess 43, formed in the inner wall 32 of the first part 28 and arranged to form the rib 24 of the plastic material part.

The first part 28 of the mold 26 can comprise at least one suction channel 44, such that the suction channel 44 is opposite the reinforcement element 12, which can be used to maintain and to plate the reinforcing element 12 against the first part 28 of the mold 26 and/or to draw the injection plastic material in the recess 43.

When the manipulating tool 40 applies the shaping area 42 against the inner wall 32 of the first part 28 of the mold 26, the reinforcing element 12 is pressed between the shaping area 42 and the inner wall 32 of the first part 28, which presents the shape of the inner face 18 of the reinforcement element 12 where the fibrous inserts 20 are placed.

Consequently, the reinforcing element 12 is shaped and acquires its wanted three-dimensional shape.

The manipulating tool 40 comprises a blowing device 45 and/or an ejection unit 46, for example in the form of at least one pin 47 arranged to push the reinforcing element 12 out of the shaping area 42. After the reinforcing element 12 is shaped, the blowing device 45 releases the reinforcing element 12 from the manipulating tool 40 when the ejection unit 46 ejects the reinforcing element 12 from the shaping area 42, such that the reinforcing element 12 stays on the first part 28 of the mold 26. The manipulating tool 40 moves away from the mold 26, such that the mold 26 can be closed.

The reinforcing element 12 can then be secured on the first part of the mold, for example with needles 48 passing through the reinforcement element 12 and/or by applying a vacuum between the inner face 32 of the first part of the mold 28 and the inner face 18 of the reinforcement element 12, thanks to the suction channel 44, and/or by sliders which clamp the reinforced elements. Needles, vacuum and sliders allow to secure the reinforcing element 12 on the inner wall 32 of the first part 28 and to avoid any contact with the second part 30 of the mold 26 during the plastic injection. According to other embodiments, the reinforcing element 12 is secured on the first part 28 of the mold 26 while it is shaped, during the plastic injection.

According to other embodiments, the reinforcing element 12 is secured on the first part 28 of the mold 26 when the manipulating tool 40 ejects the reinforcing element 12. Particularly, the needles are extended along axes, which are different from the ejection axis, to ensure that the reinforcing element 12 is maintained on the first part 28 of the mold 26 and cannot escape from the needles.

As shown on figure 5, the mold 26 is then closed. The reinforcing element 12 does not touch the second part 30 of the mold 26, but only the first part 28. The reinforcing element 12 extends inside the cavity 38 between the first part 28 and the second part 30 of the mold 26.

A pre-heated plastic material is injected into the cavity 38 through the inlet 36 as depicted on figure 6.

The inlet 36 is for example placed in the second part 30 of the mold 26 such that the plastic material is injected on the outer side of the plastic material part 10. This makes it possible to press by plastic flow the reinforcing element 12 on the first part 28 of the mold 26. In this case, the inlet 36 is placed on a spot of the material part 10, which will not be visible in the finished part, to avoid any visible mark due to the injection point. Alternatively, the inlet 36 is placed on a visible area of the material part 10 and produces a gating, which is then sheared or covered with a decorative part.

It should be noted that the reinforcing element 12 is porous due to the nature of its material such that the injected plastic material can flow through the reinforcing element 12. If the porosity of the reinforcing element 12 is not sufficient, apertures through the reinforcing element 12 can be provided to allow the plastic material to flow from one side of the reinforcement element 12 to the other side. Another solution is to inject separately the plastic rib 24 after or during the injection of the main portion 22.

The cavity 38 is filled and the plastic material forms the plastic body 14. The temperature of the plastic material is also sufficient enough for the plastic material to spread through the reinforcing element 12 and fill the empty spaces of the reinforcing element 12. The plastic material therefore blends with the composite material of the reinforcing element 12 and fills the whole cavity 38.

If a plurality of inserts 20 is used to form one reinforcing element 12, the inserts 20 are bound together during this step of overmolding.

Lastly the mold 26 is then opened and the needles 48 are removed to retrieve the reinforced plastic material part 10 from the mold 26. The needles 48 can be retracted before the complete filling to avoid visible marks on the outer side of the plastic material part.

The obtained plastic material part 10 has satisfactory mechanical and aesthetic properties while being light and thin, thanks to the reinforcement element 12. Furthermore, the bounding between the reinforcement element 12 and the plastic material body 14 is particularly robust, thanks to the blending between the plastic material of the plastic body 14 and the plastic material of the matrix of the reinforcement element 12.

The method described above presents a short cycle since the reinforcement element 12 is partly shaped during its transportation between the oven and the mold 26. Consequently, the time needed to fully shape the reinforcement element 12 in the mold 26 can be reduced. Furthermore, the method requires only a single mold 26, which makes it less costly and less space consuming.

## Claims

1. A method for producing a plastic material part (10), comprising at least a reinforcing element (12) made of at least one fibrous insert (20) made of a composite material, using an injection mold (26) comprising a first part (28) and a second part (30) defining between them a molding cavity (38) having the shape of the plastic material part (10) to be produced, said method comprising the steps of:
- transporting and placing the reinforcing element (12) onto the first part (28) of the injection mold (26) using a manipulating tool (40),
- shaping the fibrous insert (20) into the reinforcing element (12),
- injecting a plastic material into the mold (26) such that the reinforcing element (12) is overmolded by the plastic material and the plastic material part (10) is produced,
wherein the manipulating tool (40) comprises at least one shaping area (42) having the shape of one side of the reinforcing element (12), the fibrous insert (20) being placed in said shaping area (42) during the transportation of the fibrous insert (20) to the first part (28) of the mold (26) and being shaped into the reinforcing element (12) by said shaping area (42) and said first part of the mold (28) when said insert (20) is transported or/and is placed onto the first part (28) of the injection mold (26).

2. A method according to claim 1, wherein the shaping area (42) is a counterform having a complementary shape of the shape of the wanted reinforcing element (12).

3. A method according to any of claims 1 or 2, wherein it comprises a step of heating the fibrous insert (20) prior and/or during the transportation of the reinforcing element (12) to the first part (28) of the mold (26).

4. A method according to any of claims 1 to 3, wherein the manipulating tool (40) has a blowing device (45) and/or an ejection unit (46) arranged to eject the reinforcing element (12) from the shaping area (42) after it is shaped and before the injection of the plastic material.

5. A method according to any of claims 1 to 4, wherein the reinforcing element (12) is secured on the first part (28) of the mold (26) while and/or after it is shaped and before the injection of the plastic material.

6. A method according to any of claims 1 to 5, wherein the fibrous insert (20) comprises fabrics of composite material comprising fiberglass or carbon fiber or other kind of fibers, unidirectional or weaved together along two perpendicular directions.

7. A method according to any of claims 1 to 6, wherein the reinforcing element (12) is made of a plurality of fibrous inserts (20), said plurality of fibrous inserts (20) being placed on the shaping area (42) of the manipulation tool (40), being shaped together into the reinforcing element (12) and being bound together by overmolding during the injection of the plastic material.

8. A method according to any of claims 1 to 7, wherein the plastic material penetrates into the reinforcing element (12), during its injection, and blends with the composite material of the reinforcing element (12).

9. A method according to any of claims 1 to 8, wherein the plastic material forms a main surface (22) of the plastic material part (10) on one side (19) of the reinforcing element (12) and at least one rib (24) on the other side (18) of the reinforcing element (12).

10. A plastic material part (10) produced according to any of the method of claims 1 to 9.
